(19) Europäisches Patentamt
European Patent Office
Office européen des brevets

(11) EP 2 632 266 B1

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **11764727.1**

(22) Anmeldetag: **30.09.2011**

(51) Int Cl.:
***A01N 43/56*** *(2006.01)* ***A01N 31/14*** *(2006.01)*
***A01N 37/38*** *(2006.01)* ***A01N 43/40*** *(2006.01)*
***A01N 43/52*** *(2006.01)* ***A01N 43/653*** *(2006.01)*
***A01N 43/78*** *(2006.01)* ***A01N 43/84*** *(2006.01)*
***A01N 47/18*** *(2006.01)* ***A01N 47/38*** *(2006.01)*
***A01N 53/00*** *(2006.01)* ***A01N 59/20*** *(2006.01)*
***A01P 3/00*** *(2006.01)* ***B27K 3/22*** *(2006.01)*
***B27K 3/52*** *(2006.01)*

(86) Internationale Anmeldenummer:
**PCT/EP2011/067163**

(87) Internationale Veröffentlichungsnummer:
**WO 2012/055673 (03.05.2012 Gazette 2012/18)**

(54) **PENFLUFEN ALS HOLZSCHUTZMITTEL GEGEN HOLZZERSTÖRENDE BASIDIOMYCETEN**

PENFLUFEN AS A WOOD PRESERVATIVE AGAINST XYLOPHAGOUS BASIDIOMYCETES

PENFLUFÈNE EN TANT QU'AGENT DE PROTECTION DU BOIS CONTRE LES BASIDIOMYCÈTES DÉTRUISANT LE BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2010 EP 10190021**
**25.10.2010 EP 10188711**

(43) Veröffentlichungstag der Anmeldung:
**04.09.2013 Patentblatt 2013/36**

(73) Patentinhaber: **LANXESS Deutschland GmbH**
**50569 Köln (DE)**

(72) Erfinder:
- **KOOP, Bernd**
**50668 Köln (DE)**
- **KUGLER, Martin**
**42799 Leichlingen (DE)**
- **JAETSCH, Thomas**
**50668 Köln (DE)**
- **KAULEN, Johannes**
**51519 Odenthal (DE)**
- **GERHARZ, Tanja**
**40599 Düsseldorf (DE)**

(56) Entgegenhaltungen:
**EP-A1- 2 000 028** **WO-A1-03/010149**
**WO-A1-2010/000790** **WO-A2-2010/092028**
**DE-A1- 19 548 873**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von Penflufen und mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox zum Schutz von Holz und holzhaltigen Materialien vor holzzerstörenden Basidiocmyceten.

Penflufen (N-(2-[1,3-Dimethylbutylphenyl]-5-fluor-1,3-dimethyl-1H-pyrazol-4-carboxyamid) ist ein Pyrazolylcarboxanilid der Formel (I). Zudem ist Penflufen ein Fungizid.

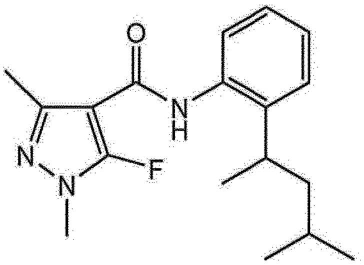

(I)

Pyrazolylcarboxanilide stellen spezielle Carboxamide dar und sind aus der WO 03/010149 zur Bekämpfung von unerwünschten Mirkroorganismen im Pflanzenschutz und Materialschutz bekannt. In der WO 03/010149 wird Penflufen in einer Liste von weiteren Pyrazolylcarboxaniliden genannt und die Wirkung von Penflufen als Pflanzenschutzmittel in einem Beispiel dargestellt.

Die Verwendung optisch aktiver Carboxamide, auch in Mischungen mit weiteren bioziden Verbindungen, für den Pflanzenschutz und den Materialschutz ist aus WO 2005/058839 bekannt. Die Wirkung eines optisch aktiven Enantiomeren des Penflufens für den Pflanzenschutz wird in den Beispielen gezeigt.

Aus der WO 2006/114212 und der WO 2010/092028 sind Wirkstoffkombinationen aus Carboxamiden mit bekannten insektiziden Wirkstoffen zur Bekämpfung von unerwünschten tierischen Schädlingen, sowie unerwünschten phytophathogenen Pilzen auch für die Verwendung im Materialschutz bekannt. Mischungen aus Penflufen und Insektiziden werden in der WO 2006/114212 ebenfalls beschrieben. In den Beispielen wird u.a. auch die Wirksamkeit von Penflufen in Mischungen mit weiteren Verbindungen im Pflanzenschutz dargestellt.

Weitere Wirkstoffkombinationen aus Carboxamiden, insbesondere auch Kombinationen mit Penflufen, zum Schutz von Pflanzen und technischen Materialien, sind aus der WO 2010/000790 bekannt.

Wirkstoffkombinationen, enthaltend Penflufen, Metalaxyl und Triazole zur Bekämpfung von unerwünschten phytopathogenen Pilzen, die aber ebenfalls im Materialschutz eingesetzt werden können, sind aus der EP 2000028 A1 bekannt.

Synergistische, fungizide Wirkstoffkombinationen, die Carboxamide enthalten, mit unterschiedlichsten Mischungspartnern sind aus der WO 2005/041653 bekannt. Auch hier wird Penflufen unter anderen als Mischungspartner benannt. Die Verwendung der synergistischen, fungiziden Wirkstoffkombinationen wird zur Bekämpfung phytopathogener Pilze beschrieben.

Weiterhin ist die Verwendung von Carboxamiden für den Pflanzenschutz und für den Materialschutz aus der WO2009/098218 und der WO2009/090181 bekannt.

Weitere Wirkstoffkombinationen, die u.a. auch Penflufen enthalten können, sind aus der WO 2007/110173 und der WO 2008/014955 bekannt.

Nachteilig an den bisherigen Wirkstoffen und Wirkstoffkombinationen ist, dass diese häufig keine vergleichbar hohen Wirkungen gegen unterschiedliche Gattungen holzzerstörender Basidiomyceten im Holzschutz aufweisen.

Penflufen hat als Wirkstoff eine besonders hohe und breite Wirksamkeit gegen holzzerstörende Basidiomyceten. Selbst im Vergleich zu den strukturell geringfügig unterschiedlichen Verbindungen (II) und (III), die aus der WO 03/010149 bekannt sind, weist Penflufen eine überaus hohe Wirkung gegen unterschiedliche Gattungen holzzerstörender Basidiomyceten auf.

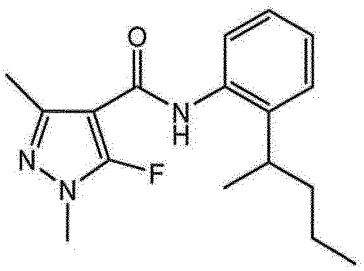
(II)

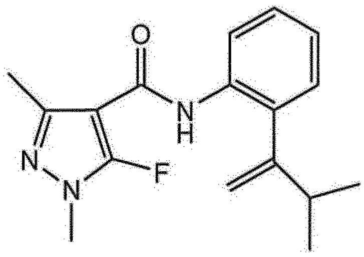
(III)

Überraschenderweise wurde nun gefunden, dass die folgenden Wirkstoffkombinationen eine synergistische Wirkung zeigen, d.h. die Wirksamkeit der Wirkstoffkombinationen ist größer als die Summe der Wirksamkeiten der Einzelwirkstoffe. Diese sind daher besonders geeignet für die Verwendung zum Schutz von Holz und holzhaltigen Materialien gegen holzzerstörende Basidiomyceten:

Kupferoxid, Prochloraz, Thiabendazol, Fenpropimorph, Cypermethrin, Permethrin, Bifenthrin, Tebuconazol, Propiconazol, und Etofenprox

Gegenstand der Erfindung ist daher die Verwendung von Penflufen und mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox zum Schutz von Holz und holzhaltigen Materialien vor holzzerstörenden Basidiomyceten.Penflufen kann sowohl als Racemat, in enantiomerenreiner Form oder als angereichertes Enantiomerengemisch eingesetzt werden. Auch eine Verwendung als Salz oder Säureadditions-verbindung ist möglich, wobei unter Salzen insbesondere Natrium-, Kalium-, Magnesium-, Calcium-, Zink-, Aluminium-, Eisen- und Kupfer-Salze verstanden wird und unter Säureadditionsverbindungen insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden wird.
Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und -türen, Tischlerarbeiten und Holzprodukte, die beim Hausbau oder in der Bautischlerei Verwendung finden.
Unter holzhaltigen Materialien werden insbesondere Holzwerkstoffe oder Holz-Plastik-Verbundstoffe (sogenannte Wood-Plastic-Composites WPC) verstanden.
Unter Holzwerkstoffen wird insbesondere verstanden: Sperrholz, Spanplatten, Faserplatten, OSB-Platten (oriented strand board) oder Verbundplatten.
Unter Holz-Plastik-Verbundstoff wird insbesondere verstanden: thermoplastisch prozessierbare Verbundwerkstoffe bestehend aus Holz, Kunststoff und Additiven.
Besonders bevorzugt ist Holz.
Besonders bevorzugt im Sinne dieser Erfindung ist der Schutz von Holz.
Als holzzerstörende Basidiomyceten, die einen Abbau oder eine Veränderung von Holz und holzhaltigen Materialien bewirken können, seien beispielsweise und vorzugsweise genannt: Coniophora, wie Coniophora puteana,
Lentinus, wie Lentinus tigrinus,
Polyporus, wie Polyporus versicolor,
Gloeophyllum, wie Gloeophyllum trabeum,
Poria, wie Poria placenta,
Stereum, wie Stereum sanguinolentum.
Besonders bevorzugt sind die holzzerstörenden Basidiomyceten, insbesondere Holobasidiomyceten. Holzzerstörende Basidiomyceten und Holobasidiomyceten sind Pilze.
Ganz besonders bevorzugt wirken die erfindungsgemäßen Zusammensetzungen gegen Arten der Gattungen Gloeophyllum, Coniophora, Coriolus, Stereum oder Poria. Noch weiter bevorzugt wirken Penflufen oder/und die erfindungsgemäßen Zusammensetzungen gegen Arten der Gattungen Coniphora oder Poria, insbesondere gegen Poria placenta und Coniphora puteana. Noch weiter bevorzugt ist die Verwendung zum Schutz von Holz gegen Poria placenta.
Die erfindungsgemäßen Zusammensetzungen können in den üblichen Formulierungen eingesetzt werden, wie Lösungen, Emulsionen, Suspensionen, Pulver, Schäume, Pasten, Granulate, Aerosole sowie Feinstverkapselungen in polymeren Stoffen.
Solche Formulierungen zum Schutz von Holz und holzhaltigen Materialien werden in bekannter Weise hergestellt, z.B. durch Vermischen des Wirkstoffes mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstengeln. Als Emulgier- und/oder schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische, pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbmittel wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe verwendet werden.

Die Formulierungen enthalten im allgemeinen 0,1 bis 95 Gew.% Wirkstoff, vorzugsweise zwischen 0,5 und 90%.

Überraschenderweise wurde nun gefunden, dass die folgenden Wirkstoffkombinationen eine synergistische Wirkung zeigen, d.h. die Wirksamkeit der Wirkstoffkombinationen ist größer als die Summe der Wirksamkeiten der Einzelwirkstoffe. Diese sind daher besonders geeignet für die Verwendung zum Schutz von Holz und holzhaltigen Materialien gegen holzzerstörende Basidiomyceten:

Bevorzugt sind Mischungen von Penflufen mit mit Kupfer(I)oxid oder/und Kupfer(II)oxid.

Bevorzugt sind Mischungen von Penflufen mit Prochloraz, sowie deren Metallsalze und Säureaddukte. Besonderes bevorzugt sind Mischungen mit Prochloraz sowie dessen Metallsalze und Säureaddukte.

Bevorzugt sind Mischungen von Penflufen mit Thiabendazol oder deren Salze. Besonders bevorzugt ist die Mischung mit Thiabendazol.

Bevorzugt sind Mischungen von Penflufen mit Permethrin, Cypermethrin, Bifenthrin, Cyfluthrin, und Etofenprox. Besonders bevorzugt sind Mischungen mit Cypermethrin, Permethrin, Bifenthrin und Etofenprox.

Von der Erfindung sind daher zudem ebenfalls Zusammensetzungen enthaltend Penflufen und mindestens eine weitere Verbindung aus der Gruppe Kupferoxid oder Thiabendazol umfasst.

Von der Erfindung sind zudem Holz und holzhaltige Materialien umfasst, die mit mindestens einer Zusammensetzung enthaltend Penflufen und mindestens einer weiteren Verbindungen aus der Gruppe Kupferoxid oder Thiabendazol behandelt wurden.

Insbesondere wurde zudem überraschend festgestellt, dass, falls die Zusammensetzung neben Penflufen ebenfalls Fenpropimorph enthalten, eine besondere hohe synergistische Wirkung festzustellen ist, wenn die Zusammensetzung 75 - 85 Gew.% Fenpropimorph und 15 - 25 Gew.% Penflufen enthält.

Eine besonders hohe synergistische Wirkung wurde zudem von der Mischung enthaltend Penflufen und eine weitere Verbindung aus der Gruppe Kupferoxide und Thiabendazol nach der Imprägnierung des Holzes und der Holzwerkstoffe auf diesen Materialien selbst festgestellt.

Penflufen kann als solches oder in Formulierungen verwendet werden, wobei es als einziges Biozid ohne weitere Wirkstoffe oder in Kombination mit bekannten Fungiziden, Bakteriziden oder Insektiziden verwendet werden kann, um so z.B. das Wirkungsspektrum zu verbreitern oder Resistenzentwicklungen vorzubeugen.

Besonders günstige Mischungspartner sind z.B. die folgenden Verbindungen:

Triazole wie:

Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte;

Imidazole wie:

Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte;

Pyridine und Pyrimidine wie:

Ancymidol, Buthiobate, Fenarimol, Mepanipyrin, Nuarimol, Pyroxyfur, Triamirol ;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Shirlan, Seedvax;

Naphthalin-Derivate wie:

Terbinafine, Naftifine, Butenafine, 3-Chloro-7-(2-aza-2,7,7-trimethyl-oct-3-en-5-in);

Sulfenamide wie:

Dichlofluanid, Tolylfluanid, Folpet, Fluorfolpet; Captan, Captofol;

Benzimidazole wie:

Carbendazim, Benomyl, Fuberidazol, Thiabendazol oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenylsulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)-hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid,

Oxazolidine, Paraformaldehyd, Taurolin, Tetrahydro-1,3-oxazin, N-(2-Hydroxypropyl)-amin-methanol, Tetramethylol-acetylen-diharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, ß-Bromzimtaldehyd, o-Phthaldialdehyd;

Thiocyanate wie:

Thiocyanatomethylthiobenzothiazol, Methylenbisthiocyanat;

quartäre Ammoniumverbindungen und Guanidine wie:

Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethyl-ammoniumchlorid, N-Hexadecyl-trimethyl-ammoniumchlorid, 1-Hexadecyl-pyridinium-chlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexyl-carbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B.

Zinn-, Kupfer-, Zinknaphtenat, -octoat, 2-ethylhexanoat, -oleat, -phosphat, - benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:

Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,

Ag, Zn oder Cu-haltige Zeolithe allein oder eingeschlossen in polymere Werkstoffe.

Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,

Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,

Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimid-amide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,

Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,

Eflusilanate, Emamectin, Empenthrin, Endosulfan, *O*-Ethyl-*O*-(4-nitrophenyl)-*P*-phenyl-phosphonothioat, Esfenvalerat, Ethiofencarb, Ethion, Etofenprox, Etrimphos, Etoxazole, Etobenzanid,

Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,

Halofenocid, HCH (CAS RN: 58-89-9), Heptenophos, Hexaflumuron, Hexythiazox, Hydramethylnon, Hydroprene,

Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,

Kadedrin,

Lambda-Cyhalothrin, Lufenuron,

Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,

Naled, Nicotin, Nitenpyram, Noviflumuron,

Omethoat, Oxamyl, Oxydemethon M, Oxydeprofos,

Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium

Quinalphos,

Resmethrin, Rotenone,

Salithion, Sebufos, Silafluofen, Spinosad, Spirodiclofen, Spiromesifen, Sulfotep, Sulprofos,

Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,

Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,

Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,

Carbetamide, Carfentrazone-ethyl, Carfenstrole, Chlomethoxyfen, Chloramben, Chlorbromuron, Chlorflurenol,

Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cybutryne, Cycloate, Cycloxydim, Chloroxynil, Clodinafop-propargyl, Cumyluron, Clometoxyfen, Cyhalofop, Cyhalofop-butyl, Clopyrasuluron, Cyclosulfamuron,

Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC (2-methyl-4,6-dinitrophenol), DSMA (Dinatrium methylarsonat), (2,4-dichlorophenoxy)essigsäure, Daimuron, Dalapon, Dazomet, 2,4-DB (4-(2,4-dichlorphenoxy)butansäure), Desmedipham, Desmetryn, Dicamba, Dichlobenil, Dimethamid, Dithiopyr, Dimethametryn,

Eglinazine, Endothal, EPTC (*S*-Ethyldipropylthiocarbamat), Esprocarb, Ethalfluralin, Ethidimuron, Ethofumesate, Ethobenzanid, Ethoxyfen, Ethametsulfuron, Ethoxysulfuron,

Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,

Glyphosate, Glufosinate-ammonium

Haloxyfop, Hexazinone,

Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,

Ketospiradox,

Lactofen, Lenacil, Linuron,

MCPA (2-(4-chloro-2-methylphenoxy)essigsäure), MCPA-hydrazid, MCPA-thioethyl, MCPB (4-(4-chlor-2-methylphenoxy)butansäure), Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA (Natriumhydrogenmethylarsonat), Metolachlor, Metosulam, Metobenzuron,

Rimsulfuron

Sethoxydim, Sifuron, Simazine, Simetryn, Sulfosulfuron, Sulfometuron, Sulfentrazone, Sulcotrione, Sulfosate,

Teeröle, TCA (Trichloressigsäure), TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thidiazimin, Thiazopyr, Triflusulfuron,

Vernolate.

Bevorzugte Mischungspartner des Penflufens sind solche mit denen sich eine synergistische Wirksamkeit ergibt.

Die Anwendungskonzentrationen der erfindungsgemäßen Wirkstoffe richten sich nach der Art und dem Vorkommen der zu bekämpfenden holzzerstörenden Basidiomyceten sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gew.-%, vorzugsweise von 0,005 bis 1,0 Gew.-% des Wirkstoffes, bezogen auf das zu schützende Material.

Die Erfindung betrifft insbesondere ein Verfahren zum Schutz von Holz und holzhaltigen Materialien, dadurch gekennzeichnet, dass man das Holz oder das holzhaltige Material mit Penflufen und mindestens einer weiteren Verbindung aus der Gruppe Kupferoxid, Prochloraz, Thiabendazol, Fenpropimorph, Cypermethrin, Permethrin, Bifenthrin,

Tebuconazol, Propiconazol, und Etofenprox und mindestens einem Verdünnungs- oder Lösungsmittel, ggf. weiteren Hilfs- und Zusatzstoffen, sowie ggf. einem oder mehreren Wirkstoffen durch Streichen, Sprühen, Tränken, Tauchen, Imprägnieren oder in sonstiger Art und Weise behandelt. Bevorzugt sind großtechnische Imprägnierverfahren wie das Vakuum-, Doppelvakuum-, Vakuumdruck- oder Druckverfahren.

Es gibt eine Vielzahl von Verfahren zur Behandlung von Holz und holzhaltigen Materialien mit Schutzmitteln. Folgende Verfahren können erfindungsgemäß eingesetzt werden, es gibt aber noch weitere, die in der Praxis Verwendung finden.

Streichen ist ein bevorzugtes Verfahren zum Aufbringen des Holzschutzmittels. Um die erforderlichen Einbringmengen zu erreichen, sind meist mehrere Arbeitsgänge nötig. Es können sowohl wasser- als auch lösungsmittelbasierte Holzschutzmittel verwendet werden. Die Retention, d.h. die vom Holz aufgenommene Menge an Holzschutzmittel, liegt bei vorzugsweise 60-200 g/$m^2$. Durch Spritzen und Sprühen erreicht man ähnliche Eindringtiefen und Retentionen wie beim Streichen.

Beim Tauchen wird das Holz vorzugsweise in einem Becken für einige Sekunden bis Minuten vollständig in das Holzschutzmittel eingetaucht. Dabei ist die Aufnahme des Schutzmittels u.a. abhängig von der Konzentration und von der Tauchzeit. Die Eindringtiefen, die man beim Tauchen erreicht, entsprechen in etwa denen beim Streichen. Die erreichbaren Retentionen an Holzschutzmittel liegen vorzugsweise bei 100-500 g/$m^2$. Die Trogtränkung ist ein spezielles Tauchverfahren. Dabei wird das Holz vorzugsweise für mehrere Stunden bis Tage untergetaucht, wodurch ein gleichmäßiges und tiefes Eindringen erreicht wird.

Im industriellen Holzschutz werden vorzugsweise Druckverfahren angewendet, um eine möglichst gleichmäßige und tiefe Verteilung des Schutzmittels zu erreichen. Bei der Kesseldruckimprägnierung wird das Holz in einem zylinderförmigen Kessel behandelt. In Abhängigkeit von der Holzart, dem Verwendungszweck, der Holzfeuchte, dem verwendeten Holzschutzmittel und der gewünschten Eindringtiefe werden verschiedene Verfahren eingesetzt. Den besten Schutz erreicht man beim Volltränkverfahren. Dabei wird zunächst ein Vakuum angelegt und anschließend das Holzschutzmittel mit hohem Druck in das Holz gepresst. Dadurch können sehr hohe Aufnahmemengen erreicht werden, die Retention an Holzschutzmittel liegt bei ca. 200-700 kg/$m^3$. Das Spartränkverfahren (z.B. das Lowry-Verfahren) wird vorzugsweise für leicht imprägnierbare Holzarten verwendet. Bei diesem Verfahren wird vorzugsweise kein Vorvakuum angelegt, sondern gleich die Schutzmittellösung mit Druck ins Holz gepresst. Nach der Druckphase wird durch die komprimierte Luft ein Teil des Holzschutzmittels wieder aus dem Holz gedrückt. Die erreichbare Retention ist im Allgemeinen kleiner als beim Volltränkverfahren.

Mit dem Wechseldruckverfahren wird vorzugsweise Holz mit einer Feuchte größer 80% getränkt. Dabei wird der Kessel ohne Vorvakuum mit dem Holzschutzmittel geflutet. Nach einer Vordruckphase, die ca. 30-60 min dauert, beginnen dynamische Druckwechsel. In kurzen Abständen folgen vorzugsweise Vakuum- und Druckphasen aufeinander.

Das Doppelvakuumverfahren wird vorzugsweise zur Imprägnierung von trockenem Holz verwendet. Dabei wird der Kessel in einem ersten Schritt vorzugsweise evakuiert, dann wird der Kessel mit dem Holzschutzmittel geflutet und bei Normaldruck getränkt. Anschließend wird vorzugsweise wieder Vakuum angelegt, um überschüssige Lösung zu entfernen. Es können sowohl lösungsmittel- als auch wasserbasierte Holzschutzmittel verwendet werden. Die Retention an Holzschutzmittel liegt bei diesem Verfahren vorzugsweise bei 20-40 kg/$m^3$.

Mit Penflufen geschützte Holz-Plastik-Verbundstoffe können bspw. dadurch hergestellt werden, dass man Holzpartikel, ein thermoplastisches Polymer und Penflufen, ggf. in Form einer Formulierung, und ggf. Formulierhilfsmittel unter Verwendung von thermischer Energie vermischt, insbesondere extrudiert oder spritzgießt.

Holzwerkstoffe können beispielsweise mit dem Leimuntermischverfahren behandelt werden. Dabei wird Penflufen, ggf. in Form einer Formulierung, der Leimflotte beigegeben und dieser biozid-ausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird das Penflufen, ggf in Form einer Formulierung, auf den Holzwerkstoff aufgesprüht oder mit einer Walze aufgetragen.

Auf erfindungsgemäße Weise, durch Verwendung von Penflufen und mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox im Holzschutz, konnten Holz und holzhaltige Materialien wirksam gegen holzzerstörende Basidiomyceten geschützt werden. Penflufen erfüllt hierbei die hohen Anforderungen bzgl. Stabilität, Auswaschverhalten, Farbigkeit und Kompatibilität zu den unterschiedlichsten Formulierhilfsmitteln trotz der Teils extremen Bedingungen, die insbesondere die Anwendung drastischer Applikationsverfahren bedingen und häufig von Wirkstoffen, die bevorzugt gegen phytopathogene Pilze wirken, nicht erfüllt werden. Diese Eigenschaften werden durch die erfindungsgemäßen Mischungen durch synergistische Wirkungen sogar noch verstärkt.

**Beispiele:**

**Beispiel 1: Hemmtest an Riesenkolonien von holzzerstörenden Basidiomyceten**

Aus Kolonien von Coniophora puteana, Poria placenta, Lentinus tigrinus, Coriolus versicolor und Gloeophyllum trabeum wurden Mycelstücke ausgestochen und auf einem Agarnährboden bei 26°C inkubiert. Die Hemmung des Hyphenwachstums auf wirkstoffhaltigem Nährboden wurde mit dem Längenwachstum ohne Wirkstoffzusatz verglichen und als prozentuale Hemmung bonitiert (Inkubationszeit: ca. 1 Woche, abhängig vom Pilzwachstum der Vergleichsprobe ohne Wirkstoff). Die Konzentration an Wirkstoff betrug 1 ppm.

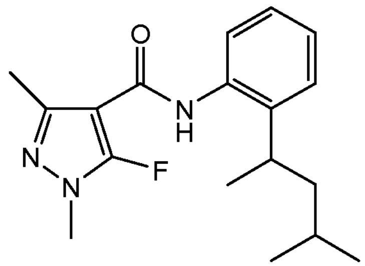 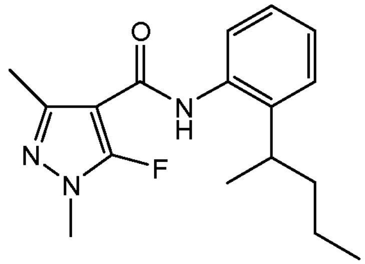 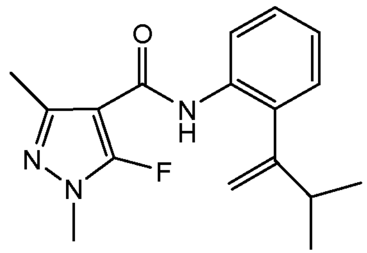

(I) (II) (III)

| Nr. | Pilz | Hemmung [%] | | |
|---|---|---|---|---|
| | | I | II | III |
| 1 | Coniophora puteana | 100 | 12 | 25 |
| 2 | Coriolus versicolor | 100 | 15 | 78 |
| 3 | Lentinus tigrinus | 100 | 17 | 37 |
| 4 | Poria placenta | 100 | 3 | 45 |
| 5 | Gloeophyllum trabeum | 100 | 11 | 18 |

Penflufen (I) wirkt gegen holzzerstörende Basidiomyceten deutlich besser als (II) und (III).

**Beispiel 2: Synergismus-Tests**

Aus einer Kolonie des entsprechenden holzzerstörenden Pilzes wurden Mycelstücke ausgestochen und auf einem Malzextrakt-Pepton-haltigen Nähragar bei 26°C inkubiert. Hierbei wurde das Hyphenwachstum mit und ohne Wirkstoff verglichen. Als Minimale Hemmkonzentration (MHK) wurde die Konzentration angegeben, welche das radiale Hyphenwachstum völlig unterdrückt.

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = SI$$

SI = 1 bedeutet Additivität
SI > 1 bedeutet Antagonismus
SI < 1 bedeutet Synergismus
$Q_a$ = Konzentration von Substanz A, welche die MHK darstellt
$Q_b$ = Konzentration von Substanz B, welche die MHK darstellt
$Q_A$ = Konzentration von Substanz A in der Konzentration von A/B, die das Mikrobenwachstum unterbindet
$Q_B$ = Konzentration von Substanz B in der Konzentration von A/B, die das Mikrobenwachstum unterbindet

**2.1 Kombinationen von Penflufen und Thiabendazol gegen den Holzdestruenten Coriolus versicolor**

| | MHK gegen Coriolus versicolor (ppm) | SI |
|---|---|---|
| Penflufen | 0,3 | - |
| Penflufen : Thiabendazol 9 : 1 | 0,3 | 0,91 |
| Penflufen : Thiabendazol 3 : 2 | 0,3 | 0,64 |
| Penflufen : Thiabendazol 1 : 1 | 0,5 | 0,92 |
| Penflufen : Thiabendazol 2 : 3 | 0,5 | 0,77 |
| Thiabendazol | 3,0 | - |

**2.2 Kombinationen von Penflufen und Fenpropimorph gegen die Holzdestruenten Coniophora puteana und Lentinus tigrinus**

| | | **MHK (ppm)** | | **SI** | |
|---|---|---|---|---|---|
| | | **Coniophora puteana** | **Lentinus tigrinus** | **Coniophora puteana** | **Lentinus tigrinus** |
| Penflufen | | 1,0 | 0,5 | | |
| Penflufen : Fenpropimorph | 7:3 3 | 0,7 | 0,5 | 0,50 | 0,71 |
| Penflufen : Fenpropimorph | 6:4 | 1,0 | 0,5 | 0,61 | 0,61 |
| Penflufen : Fenpropimorph | 1:1 | 0,7 | 0,7 | 0,36 | 0,71 |
| Penflufen : Fenpropimorph | 4:6 | 0,7 | 0,7 | 0,29 | 0,57 |
| Penflufen : Fenpropimorph | 3:7 | 0,7 | 0,7 | 0,23 | 0,44 |

(fortgesetzt)

| | | MHK (ppm) | | SI | |
|---|---|---|---|---|---|
| | | **Coniophora puteana** | **Lentinus tigrinus** | **Coniophora puteana** | **Lentinus tigrinus** |
| Penflufen : Fenpropimorph | 2:8 | 0,5 | 0,5 | 0,11 | 0,21 |
| Penflufen : Fenpropimorph | 1:9 | 0,7 | 3,0 | 0,09 | 0,69 |
| Fenpropimorph | | 30 | 30 | | |

**2.3 Kombinationen von Penflufen und Kupfer(II)oxid gegen den Holzdestruenten Gloeophyllum trabeum**

| | MHK gegen Gloeophyllum trabeum (ppm) | SI |
|---|---|---|
| Penflufen | 0,3 | - |
| Penflufen : Kupfer(II)oxid 7 : 3 | 0,3 | 0,70 |
| Penflufen : Kupfer(II)oxid 6 : 4 | 0,1 | 0,20 |
| Penflufen : Kupfer(II)oxid 1 : 1 | 0,3 | 0,50 |
| Penflufen : Kupfer(II)oxid 4 : 6 | 0,5 | 0,67 |
| Penflufen : Kupfer(II)oxid 3 : 7 | 0,5 | 0,50 |
| Penflufen : Kupfer(II)oxid 2 : 8 | 1,0 | 0,67 |
| Kupfer(II)oxid | 100,0 | - |

**2.4 Kombinationen von Penflufen und Tebuconazol gegen den Holzdestruenten Stereum sanguinolentum**

| | MHK gegen Stereum sanguinolentum (ppm) | SI |
|---|---|---|
| Penflufen | 3,0 | - |
| Penflufen : Tebuconazol 6 : 4 | 1,0 | 0,27 |
| Penflufen : Tebuconazol 1 : 1 | 3,0 | 0,75 |
| Penflufen : Tebuconazol 4 : 6 | 0,7 | 0,16 |
| Penflufen : Tebuconazol 3 : 7 | 0,5 | 0,11 |
| Penflufen : Tebuconazol 2 : 8 | 0,5 | 0,10 |
| Penflufen : Tebuconazol 1 : 9 | 1,0 | 0,18 |
| Tebuconazol | 6,0 | - |

**2.5 Kombinationen von Penflufen und Propiconazol gegen den Holzdestruenten Coniophora puteana**

| | MHK gegen Coniophora puteana (ppm) | SI |
|---|---|---|
| Penflufen | 3,0 | - |
| Penflufen : Propiconazol 9 : 1 | 1,0 | 0,33 |
| Penflufen : Propiconazol 8 : 2 | 0,5 | 0,17 |
| Penflufen : Propiconazol 7 : 3 | 0,5 | 0,17 |
| Penflufen : Propiconazol 6 : 4 | 0,5 | 0,17 |
| Penflufen : Propiconazol 1 : 1 | 0,5 | 0,17 |

(fortgesetzt)

| | MHK gegen Coniophora puteana (ppm) | SI |
|---|---|---|
| Penflufen : Propiconazol 4 : 6 | 0,5 | 0,17 |
| Penflufen : Propiconazol 3 : 7 | 0,3 | 0,10 |
| Penflufen : Propiconazol 2 : 8 | 0,5 | 0,17 |
| Penflufen : Propiconazol 1 : 9 | 0,5 | 0,17 |
| Propiconazol | 3,0 | - |

**2.6 Kombinationen von Penflufen und Permethrin gegen den Holzdestruenten Poria placenta**

| | MHK gegen Poria placenta (ppm) | SI |
|---|---|---|
| Penflufen | 0,1 | - |
| Penflufen : Permethrin 7 : 3 | 0,1 | 0,70 |
| Penflufen : Permethrin 6 : 4 | 0,1 | 0,60 |
| Penflufen : Permethrin 1 : 1 | 0,1 | 0,50 |
| Penflufen : Permethrin 4 : 6 | 0,1 | 0,40 |
| Permethrin | >100 | - |

**2.7 Kombinationen von Penflufen und Etofenprox gegen den Holzdestruenten Poria placenta**

| | MHK gegen Poria placenta (ppm) | SI |
|---|---|---|
| Penflufen | 0,1 | - |
| Penflufen : Etofenprox 7 : 3 | 0,1 | 0,70 |
| Penflufen : Etofenprox 6 : 4 | 0,1 | 0,60 |
| Penflufen : Etofenprox 1 : 1 | 0,1 | 0,50 |
| Penflufen : Etofenprox 4 : 6 | 0,1 | 0,40 |
| Penflufen : Etofenprox 3 : 7 | 0,1 | 0,30 |
| Penflufen : Etofenprox 2 : 8 | 0,3 | 0,60 |
| Penflufen : Etofenprox 1 : 9 | 0,1 | 0,10 |
| Etofenprox | >100 | - |

**2.8 Kombinationen von Penflufen und Prochloraz gegen die Holzdestruenten Coniophora puteana und Lentinus tigrinus**

| | | **MHK (ppm)** | | **SI** | |
|---|---|---|---|---|---|
| | | **Coniophora puteana** | **Lentinus tigrinus** | **Coniophora puteana** | **Coniophora puteana** |
| Penflufen | | 3,0 | 0,3 | | |
| Penflufen: Prochloraz | 3:7 | 0,3 | 0,5 | 0,04 | 0,52 |
| Penflufen: Prochloraz | 2:8 | 0,3 | 1,0 | 0,03 | 0,71 |

(fortgesetzt)

| | | MHK (ppm) | | SI | |
|---|---|---|---|---|---|
| | | Coniophora puteana | Lentinus tigrinus | Coniophora puteana | Coniophora puteana |
| Penflufen: Prochloraz | 1:9 | 1,0 | 1,0 | 0,06 | 0,38 |
| Prochloraz | | >30 | 20 | | |

**2.9 Kombinationen von Penflufen und Bifenthrin gegen den Holzdestruenten Coriolus versicolor**

| | MHK gegen Coriolus versicolor (ppm) | SI |
|---|---|---|
| Penflufen | 0,1 | - |
| Penflufen : Bifenthrin 4 : 6 | 0,1 | 0,40 |
| Penflufen : Bifenthrin 3 : 7 | 0,1 | 0,30 |
| Penflufen : Bifenthrin 2 : 8 | 0,3 | 0,60 |
| Penflufen : Bifenthrin 1 : 9 | 0,1 | 0,10 |
| Bifenthrin | 60,0 | - |

**2.10 Kombinationen von Penflufen und Cypermethrin gegen die Holzdestruenten Coriolus versicolor und Poria placenta**

| | | MHK (ppm) | | SI | |
|---|---|---|---|---|---|
| | | Coriolus versicolor | Poria placenta | Coriolus versicolor | Poria placenta |
| Penflufen | | 0,1 | 0,1 | | |
| Penflufen : Cypermethrin | 7:3 | 0,1 | 0,1 | 0,70 | 0,70 |
| Penflufen : Cypermethrin | 6:4 | 0,1 | 0,1 | 0,60 | 0,60 |
| Penflufen: Cypermethrin | 1:1 | 0,1 | 0,1 | 0,50 | 0,50 |
| Penflufen : Cypermethrin | 4:6 | 0,1 | 0,1 | 0,40 | 0,40 |
| Penflufen : Cypermethrin | 3:7 | 0,1 | 0,1 | 0,30 | 0,30 |
| Penflufen : Cypermethrin | 2:8 | 0,3 | 0,3 | 0,60 | 0,60 |
| Penflufen : Cypermethrin | 1:9 | 0,1 | 0,5 | 0,10 | 0,50 |
| Cypermethrin | | >100 | >100 | | |

**Beispiel 3: Wirktest in Anlehnung an EN113**

Penflufen (I) wurde in Anlehnung an den EN113-Normtest auf die Wirksamkeit gegen holzzerstörende Pilze geprüft. Im Unterschied zum Normtest wurden kleinere Hölzer verwendet und die Hölzer wurden dem Angriff der Pilze eine kürzere Zeit ausgesetzt.

Dazu wurden getrocknete Prüfkörper (25x15x4 mm) aus Kiefer (Pinus sylvestris) jeweils mit Lösungen von Penflufen (I) in Toluol vakuumgetränkt. Ausgehend von der Konzentration von Penflufen (I) in der Tränklösung und der Aufnahme der Tränklösung im Prüfkörper wurde die vom Prüfkörper aufgenommene Wirkstoffmenge (Retention) berechnet. Die Prüfkörper wurden getrocknet und anschließend gewogen. Um eine verfälschende Fremdverkeimung vorzubeugen, wurden die Prüfkörper mit γ-Strahlen sterilisiert.

### 3.1 Wirksamkeit gegen Poria placenta

Die Prüfkörper wurden in Kontakt mit dem Holzdestruenten Poria placenta gebracht und 6 Wochen gelagert. Anschließend wurden die Prüfhölzer gereinigt, getrocknet und gewogen. Daraus wurde der Masseverlust berechnet. Für jede Retention wurde der Mittelwert von 6 Prüfkörpern ermittelt.

| Nr. | Retention Penflufen [g/$m^3$] | Masseverlust [%] |
|---|---|---|
| 1 | 0 | 20 |
| 2 | 50 | 0 |
| 3 | 102 | 0 |

Penflufen (I) zeigt eine sehr gute Wirkung gegen den holzzerstörenden Pilz Poria placenta.

### 3.2 Wirksamkeit gegen Coniophora puteana

Die Prüfkörper wurden in Kontakt mit dem Holzdestruenten Coniophora puteana gebracht und 6 Wochen gelagert. Anschließend wurden die Prüfhölzer gereinigt, getrocknet und gewogen. Daraus wurde der Masseverlust berechnet. Für jede Retention wurde der Mittelwert von 6 Prüfkörpern ermittelt.

| Nr. | Retention Penflufen [g/$m^3$] | Masseverlust [%] |
|---|---|---|
| 1 | 0 | 24 |
| 2 | 50 | 0 |
| 3 | 103 | 0 |

Penflufen (I) zeigt eine sehr gute Wirkung gegen den holzzerstörenden Pilz Coniophora puteana.

## Patentansprüche

1. Verwendung von Penflufen und mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox zum Schutz von Holz und holzhaltigen Materialien vor holzzerstörenden Basidiomyceten.

2. Verwendung gemäß Anspruch 1, **dadurch gekennzeichnet, dass** der Schutz des Holzes und der holzhaltigen Materialien gegen Holobasidiomyceten besteht.

3. Zusammensetzung enthaltend Penflufen und mindestens eine der folgenden Verbindungen ausgewählt aus der Gruppe Kupferoxid oder Thiabendazol.

4. Zusammensetzung gemäß Anspruch 9 enthaltend 65 - 55 Gew. % Penflufen und 35 - 45 Gew.% Kupferoxid.

5. Holz und holzhaltige Materialien enthaltend Penflufen und mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox.

6. Verfahren zum Schutz von Holz und holzhaltigen Materialien vor Befall und/oder Zerstörung durch holzzerstörende Basidiomyceten, **dadurch gekennzeichnet, dass** man das Holz oder das holzhaltige Material mit Penflufen und

mindestens einer weiteren Verbindung aus der Gruppe Kupferoxid, Prochloraz, Thiabendazol, Fenpropimorph, Cypermethrin, Permethrin, Bifenthrin, Tebuconazol, Propiconazol, und Etofenprox und mindestens einem Verdünnungs- oder Lösungsmittel, ggf. weiteren Hilfs- und Zusatzstoffen, sowie ggf. einem oder mehreren Wirkstoffen durch Streichen, Sprühen, Tränken, Tauchen, Imprägnieren oder in sonstiger Art und Weise behandelt.

7. Verwendung der Zusammensetzung gemäß Anspruch 3 zum Schutz von Holz und holzhaltigen Materialien vor holzzerstörenden Basidiomyceten.

## Claims

1. Use of penflufen and at least one further compound from the group consisting of copper oxide, prochloraz, thiabendazole, fenpropimorph, cypermethrin, permethrin, bifenthrin, tebuconazole, propiconazole, and etofenprox for protecting wood and wood-comprising materials against wood-destroying basidiomycetes.

2. Use according to Claim 1, **characterized in that** the wood and the wood-comprising materials are protected against holobasidiomycetes.

3. Composition, comprising penflufen and at least one of the following compounds selected from the group consisting of copper oxide and thiabendazole.

4. Composition according to Claim 9, comprising 65 - 55% by weight of penflufen and 35 - 45% by weight of copper oxide.

5. Wood and wood-comprising materials, comprising penflufen and at least one further compound from the group consisting of copper oxide, prochloraz, thiabendazole, fenpropimorph, cypermethrin, permethrin, bifenthrin, tebuconazole, propiconazole, and etofenprox.

6. Process for protecting wood and wood-comprising materials against attack and/or destruction by wood-destroying basidiomycetes, **characterized in that** the wood or the wood-comprising material is treated with penflufen and at least one further compound from the group consisting of copper oxide, prochloraz, thiabendazole, fenpropimorph, cypermethrin, permethrin, bifenthrin, tebuconazole, propiconazole, and etofenprox and at least one diluent or solvent, optionally further auxiliaries and additives and optionally one or more active compounds, by painting, spraying, drenching, submersion, impregnation or in any other manner.

7. Use of the composition according to Claim 3 for protecting wood and wood-comprising materials against wood-destroying basidiomycetes.

## Revendications

1. Utilisation de penflufène et d'au moins un autre composé du groupe formé par l'oxyde de cuivre, le prochloraz, le thiabendazole, le fenpropimorphe, la cyperméthrine, la perméthrine, la bifenthrine, le tébuconazole, le propiconazole et l'étofenprox pour la protection du bois et de matériaux contenant du bois contre les basidiomycètes qui dégradent le bois.

2. Utilisation selon la revendication 1, **caractérisée en ce que** la protection du bois et des matériaux contenant du bois est contre les holobasidiomycètes.

3. Composition contenant du penflufène et au moins un des composés suivants, choisis dans le groupe formé par l'oxyde de cuivre ou le thiabendazole.

4. Composition selon la revendication 9, contenant 65-55% en poids de penflufène et 35-45% en poids d'oxyde de cuivre.

5. Bois et matériaux contenant du bois contenant du penflufène et au moins un autre composé du groupe formé par l'oxyde de cuivre, le prochloraz, le thiabendazole, le fenpropimorphe, la cyperméthrine, la perméthrine, la bifenthrine, le tébuconazole, le propiconazole et l'étofenprox.

6. Procédé pour la protection du bois et de matériaux contenant du bois contre l'attaque et/ou la dégradation par des basidiomycètes dégradant le bois, **caractérisé en ce qu'**on traite le bois ou le matériau contenant du bois avec du penflufène et au moins un autre composé du groupe formé par l'oxyde de cuivre, le prochloraz, le thiabendazole, le fenpropimorphe, la cyperméthrine, la perméthrine, la bifenthrine, le tébuconazole, le propiconazole et l'étofenprox et au moins un diluant ou solvant, le cas échéant d'autres adjuvants et additifs, ainsi que le cas échéant une ou plusieurs substances actives par enduction, pulvérisation, imbibition, immersion, imprégnation ou d'une autre manière.

7. Utilisation de la composition selon la revendication 3 pour la protection du bois et de matériaux contenant du bois contre les basidiomycètes dégradant le bois.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03010149 A
- WO 2005058839 A
- WO 2006114212 A
- WO 2010092028 A
- WO 2010000790 A
- EP 2000028 A1
- WO 2005041653 A
- WO 2009098218 A
- WO 2009090181 A
- WO 2007110173 A
- WO 2008014955 A


### In der Beschreibung aufgeführte Nicht-Patentliteratur


- **F.C. KULL ; P.C. EISMANN ; H.D. SYLVESTROWICZ ; R.L. MAYER.** *Applied Microbiology,* 1961, vol. 9, 538-541